**Europäisches Patentamt**

**European Patent Office**

**Office européen des brevets**

(19)

(11) **EP 1 376 358 A1**

(12) **EUROPEAN PATENT APPLICATION**

(43) Date of publication:
**02.01.2004 Bulletin 2004/01**

(51) Int Cl.⁷: **G06F 11/10**

(21) Application number: **02425409.6**

(22) Date of filing: **20.06.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI** | (72) Inventors:<br>• **Olivo, Marco**<br>  **24123 Bergamo (IT)**<br>• **Impieri, Filippo**<br>  **87021 Belvedere Marittimo (IT)** |
| (71) Applicant: **STMicroelectronics S.r.l.**<br>**20041 Agrate Brianza (Milano) (IT)** | (74) Representative: **Cerbaro, Elena et al**<br>**c/o Studio Torta S.r.l. Via Viotti, 9**<br>**10121 Torino (IT)** |

(54) **An error control method for a memory device, and a memory device implementing said error control method**

(57)    Described herein is an error control method for a memory device (1), comprising the steps of detecting whether a datum read in the memory device (1) is affected by error; upon detection of the presence of an error in the datum read, subjecting the datum read to an error correction operation; and upon detection of the absence of errors in the datum read, supplying the datum read directly on the outputs of the memory device (1) without subjecting it to an error correction operation.

Fig.2

EP 1 376 358 A1

**Description**

The present invention relates to an error control method for a memory device and to a memory device implementing said error control method.

As is known, thanks to the evolution of technological processes, which makes it possible to create memory cells of ever smaller dimensions, in the last few years semiconductor memory devices have been built, which have very high storage capacities.

The increase in the number of memory cells per unit area tends, however, to reduce the mean time to failure (MTTF) of the entire memory device. But given the need to create increasingly reliable equipment or systems, the level of reliability required for the individual memory cell becomes ever more stringent. For this reason, dedicated design techniques and careful quality control of manufacture processes are adopted to prevent and reduce failures.

However, malfunctioning of memory devices cannot be eliminated completely and can be reduced only at the expense of a reduction in performance or an increase in costs.

A very effective way to increase the reliability for a memory device is represented by the design of memory devices that are immune from error using error control codes (ECC), i.e., codes that are able to detect and correct errors of the data stored in the memory cells.

In particular codes for correction of a single error or for detection of a double error and a correction of a single error are used in semiconductor memory devices of various type. In this connection, see for example K. Furutani, K. Arimoto, H.

Miyamoto, T. Kobayashi, K.-I. Yasuda, and K. Mashiko, «*A Built-in Hamming Code ECC Circuit for DRAM's»,* IEEE J. Solid-State Circuits, vol. 24, No. 1, Feb. 1989, pp. 50-56, and T. Tanzawa, T. Tanaka, K. Takeuchi, R. Shirota, S. Aritome, H. Watanabe, G. Hemink, K. Shimizu, S. Sato, Y. Takeuchi, K. Ohuchi, «*A compact on-chip ECC for low cost flash memories»,* IEEE J. Solid-State Circuits, vol. 32, No. 5, May 1997, pp. 662-669.

However, if on the one hand the adoption of an error control code increases significantly the immunity to error of the memory device, on the other, it determines a loss in performance, which in certain applications is unacceptable, of the memory device in terms of data access time, of area occupied on the silicon, and of power dissipation.

The purpose of the present invention is to provide an error control method and a memory device implementing said error control method which will enable the drawbacks described above to be overcome at least in part, and in particular will enable reduction of data access time with respect to that of the memory devices according to the prior art.

According to the present invention an error control method is provided for a memory device, as defined in Claim 1.

According to the present invention, there is also provided a memory device implementing an error control method, as defined in Claim 8.

For a better understanding of the present invention, there is now described a preferred embodiment, provided purely by way of non-limiting example, with reference to the attached drawings, in which:

-   Figure 1 illustrates a general block diagram of an electronic device comprising a microcontroller cooperating with a memory device;
-   Figure 2 illustrates a flowchart for the error control code according to the present invention;
-   Figure 3 illustrates the modality for generation of a wait signal supplied by the memory device to the microcontroller of Figure 1;
-   Figure 4 illustrates the plot of the mean error control time as a function of the memory cell defectiveness degree;
-   Figure 5 illustrates the plots of timing signals, data and addresses supplied to the memory device of Figure 1 and used by the latter according to the prior art;
-   Figure 6 illustrates the modality for generation of a timing signal according to the prior art;
-   Figure 7 illustrates the plots of timing signals, data and addresses supplied to the memory device of Figure 1 and used by the latter according to the present invention;
-   Figure 8 illustrates the modality for generation of a timing signal according to the present invention; and
-   Figure 9 illustrates the plot of the mean data access time as a function of the memory cell defectiveness degree.

The present invention will hereinafter be described with reference to a so-called embedded memory device, i.e., a memory device which, in use, is associated to an electronic device, typically a microcontroller, which sends to the memory device the addresses of the memory locations in which the data to be read are stored and acquires the data outputted by the latter.

In this type of application, in addition to the data read, the memory device typically supplies to the microcontroller also a wait signal which has the function of modifying the operation of the microcontroller.

A wait signal is currently used in some embedded Flash memory devices for implementing certain particular functions, such as that of causing the memory device to operate in the burst reading mode, in which synchronous readings are made of consecutive data at a frequency imposed by a clock signal supplied externally by the user of the memory device.

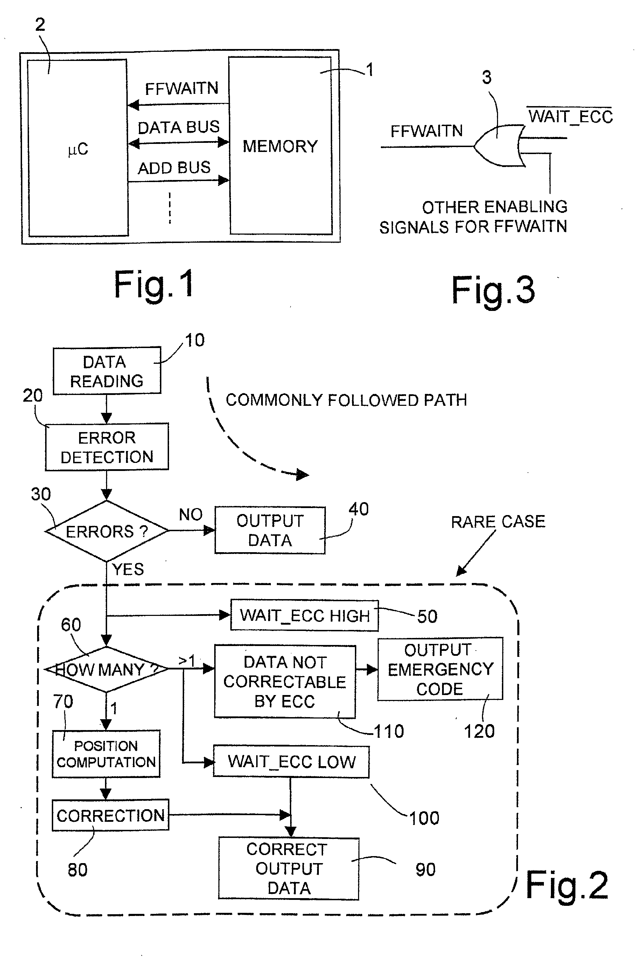

Figure 1 is a schematic illustration of the architecture described above, in which the reference number 1 designates the memory device and 2 designates the microcontroller associated thereto. In particular, the memory device 1 may be either of the nonvolatile type, for example a Flash memory, or of a volatile type, for example a SRAM or DRAM.

Figure 1 moreover illustrates, and designates by FFWAITN, the wait signal supplied by the memory device to the microcontroller, together with other data/ signals exchanged between the memory device and the microcontroller, such as data, addresses, etc.

The present invention draws inspiration from the realization that, as is known, in the step of reading of a datum, the error control envisages essentially the execution of three operations: the decoding of the datum read, the detection of the error in the datum read, and the correction of the error. However, many of the data that are read by a memory are free from error and hence do not really need to undergo a complete operation of error control using an error control code.

In the light of the above, the present invention essentially envisages implementing an error control code in which, for each datum read in the memory, the operations of decoding of the datum read and of detection of the error are assuredly performed, whilst the error correction operation is performed only on those data that are really affected by error.

A further aspect of the present invention envisages the use of the wait signal supplied by the memory device 1 to the microcontroller 2 for enabling or otherwise the acquisition of the data at that moment present on the outputs of the memory device 1 by the microcontroller 2. In particular, according to the present invention, a wait signal WAIT_ECC is generated, which normally assumes a low logic level for enabling the operation of the microcontroller 2 and hence the acquisition of the data currently present on the outputs of the memory device 1 by the microcontroller 2, whilst it is brought to a high logic level to set the microcontroller 2 in a wait state and consequently block, or rather delay, acquisition of the data currently present on the outputs of the memory device 1 by the microcontroller 2. In particular, the wait signal WAIT_ECC is kept at the high logic level for the entire time needed for carrying out the correction of the error, after which it is again brought to a low logic level to enable reading of the correct datum.

Figure 2 shows a detailed block diagram of the operations performed for controlling the error in a datum read according to the present invention.

Purely by way of non-limiting example, the ensuing description will refer, for reasons of simplicity of description, to a code for correction of a single error or for detection of a double error and for correction of a single error, without this, however, implying any loss of generality. It remains, however, clear that what has been said regarding the type of error control code taken into consideration in this treatment may equally be applied as such to error control codes that are able to correct multiple errors.

With reference to Figure 2, once a datum stored in the memory location indicated by the addresses supplied at input to the memory device by the microcontroller has been read (block 10), reading of which, as is known, is performed by the sense amplifiers of the read circuit forming part of the memory device, the datum read is decoded by means of an appropriate error detection algorithm (block 20).

A check is then made to see whether or not there are errors in the datum read (block 30). If no errors are present in the datum read (output NO from block 30), then the datum read is supplied directly to the outputs of the memory device without being subjected to the error correction operation (block 40), after which the operations resume from the ones described previously with reference to block 10, i.e., with reading of a new datum.

If, instead, the datum read is affected by error (output YES from block 30), then the operations described hereinafter with reference to blocks 50-120 are performed.

In particular, after a check has been made to see whether the datum read is affected by error, the wait signal WAIT_ECC is switched to the high logic level (block 50).

The wait signal WAIT_ECC is used for generating the wait signal FFWAITN of Figure 1, which is supplied by the memory device 1 to the microcontroller 2. Figure 3 shows, by way of example, one of the possible ways in which the wait signal FFWAITN can be generated starting from the wait signal WAIT_ECC. In particular, as shown in Figure 3, the wait signal FFWAITN can be constituted by the signal present on the output of an OR logic gate 3, on an input of which is supplied the negated wait signal $\overline{\text{WAIT\_ECC}}$ and on the other inputs of which are supplied the other enabling signals, which, inside the memory device 1, concur in generating the wait signal FFWAITN.

In this way, the switching of the wait signal WAIT_ECC to a high logic level brings about switching of the wait signal FFWAITN to a low logic level, so delaying acquisition of the data currently present on the outputs of the memory device 1 by the microcontroller 2 until the wait signal WAIT_ECC returns to a low logic level and consequently the wait signal FFWAITN reassumes a high logic level.

After switching of the wait signal WAIT_ECC to a high logic level, a syndrome is processed to check how many errors are present in the datum read (block 60).

If the datum read is affected by a number of errors equal to or less than the correction capacity of the error control code used - in the example considered a number of errors equal to one - (output "1" from block 60), then the position of the error inside the datum read is determined through the determination of the syndrome of the latter (block 70), and this error is thus corrected (block 80). Next, the correct datum is supplied on the outputs of the memory device (block 90), and the wait signal WAIT_ECC is switched to the low logic level (block 100).

This brings about a consequent switching of the wait signal FFWAITN to a high logic level, so reenabling acquisition of the data currently present on the outputs of the memory device 1 by the microcontroller 2.

Next, the operations resume from the ones described previously with reference to block 10, i.e., with the reading of a new datum in the memory device.

If, instead, the datum read is affected by a number of errors greater than the correction capacity of the error control code used - in the example considered a number of errors greater than one - (output ">1" from block 60), then the incapacity of the error control code used for correcting the datum read is determined (block 110) and hence an emergency code is sent to the outputs of the memory device 1 (block 120).

Simultaneously, the wait signal WAIT_ECC is switched to the low logic level (block 100), so bringing about a switching of the wait signal FFWAITN to a high logic level and consequently enabling acquisition of the emergency code by the microcontroller 2.

Then, the operations resume from the ones described previously with reference to block 10, i.e., with reading of a new datum in the memory device.

Implementation of the present invention renders possible a reduction in the data access time as compared to that of memory devices according to the prior art.

In fact, in memory devices according to the prior art the conventional data reading time, i.e., without error control, must on average be increased by a time for error control $T_{ECC}$ necessary for carrying out on each datum read an error control given by the following formula:

$$T_{ECC} = T_{DET} + T_{COR} \cdot \left(1 - (1 - p)^N\right)$$

where:

- $T_{DET}$ is the error detection time (detection step)
- $T_{COR}$ is the proper error location and correction time (correction step); and
- $(1-(1-p)^N)$ is a multiplying factor indicating the probability that a datum of N bits contains at least one error and hence requires correction.

As may be noted, then, the error control time $T_{ECC}$ depends upon the defectiveness degree (or error probability) p of the memory cells: the greater the defectiveness degree p, the more frequent the need, in the reading step, to carry out correction of the errors found.

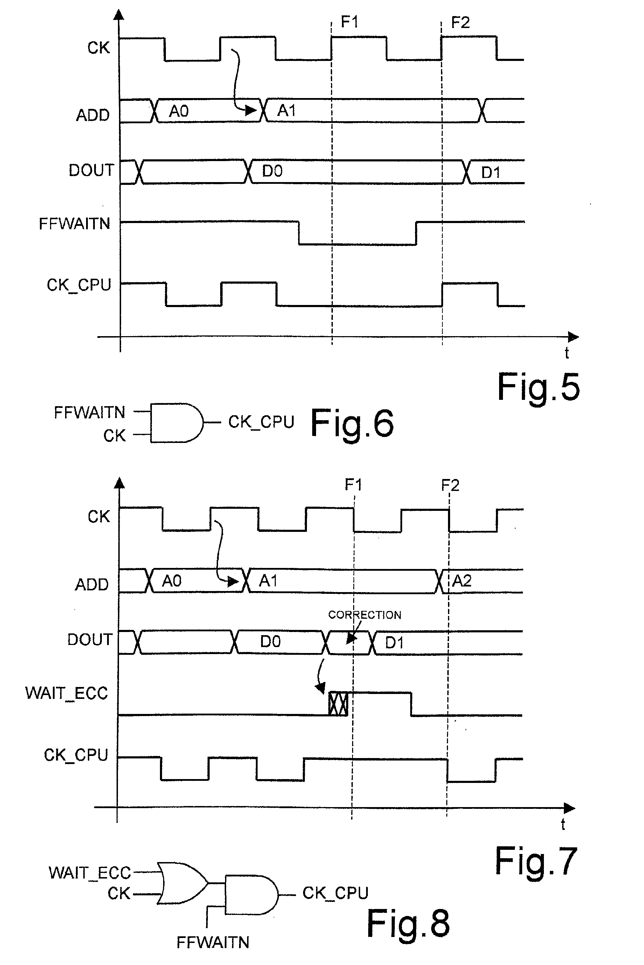

Figure 4 shows the plot over time of the error control time $T_{ECC}$ as a function of the defectiveness degree p in a memory device according to the prior art (dashed line) and in a memory device according to the invention (solid line) for reading a 64-bit datum in the so-called worst case, i.e., in the most unfavourable operating conditions of the memory device (supply voltage of 1.55 V and an operating temperature of 125 °C), where typically $T_{DET}$ = 2.58 ns and $T_{COR}$ = 1 ns.

As may be noted, up to values of defectiveness degree p of the memory cells of approximately $10^{-3}$, the error control time $T_{ECC}$ is equal to the error detection time $T_{DET}$, i.e., the term $T_{COR} \cdot (1- (1-p)^N)$ is altogether negligible, whilst for higher values of defectiveness degree p of the memory cells, the term $T_{COR} \cdot (1- (1-p)^N)$ has a significantly greater incidence on the error control time $T_{ECC}$.

Consequently, it may to all effects be stated that with the adoption of the present invention the introduction of error control in a memory device brings about an increase in the data access time equal only to the time necessary for detection of errors in the data.

As occurs in all synchronous devices, the events in a Flash memory device are timed by clock signals, which regulate the switching of the signals in the memory device and dictate the times during which these signals can vary, so that an important aspect linked to the adoption of the present invention is represented by the need to enable the error control code according to the present invention to be implemented, respecting the timings of the memory device.

An important role in all this is played by the wait signal WAIT_ECC, which should supply the necessary flexibility for regulating the operations of error control of the data read.

To carry this out, it is necessary first to analyse how the wait signal FFWAITN is currently used in Flash memory devices according to the prior art.

In this connection, see Figure 5, which shows the plots of a system clock signal CK, which represents the clock used in the electronic device in which the memory device 1 and the microcontroller 2 are used, of the wait signal FFWAITN supplied by the memory device 1 to the microcontroller 2, and of the clock signal CK_CPU used by the microcontroller 2, in relation to the transitions of the addresses ADD inputted to the memory device and of the data DOUT outputted by the memory device.

As may be noted, each address ADD is sampled by the microcontroller on the leading edge of the clock signal CK and inputted to the memory device, which acquires the address on the trailing edge. In the case where the memory device operates in burst mode, the wait signal FFWAITN is brought to the low logic level before the leading edge F1 of the clock signal CK. By bringing the wait signal to the low logic level, it is possible to mask the clock signal CK_CPU, which is obtained as logic AND between the clock signal CK and the wait signal FFWAITN, as schematically shown in Figure 6. The wait signal FFWAITN must be brought back to the high logic level prior to the leading edge F2 following upon F1, so as to enable the microcontroller to sample the next address and start the sequential reading of the data at a speed twice that of random access. The effect which is obtained is that of retarding the operation of reading by a clock cycle.

Figure 7 illustrates, instead, how the wait signal can be used in a Flash memory device implementing an error control according to the present invention. In particular, Figure 7 shows the plots of the clock signal CK, of the wait signal WAIT_ECC, and of the clock signal CK_CPU, in relation to the transitions of the addresses ADD inputted to the memory device and of the data DOUT outputted in the memory device.

As mentioned previously, the wait signal WAIT_ECC is brought to the high logic level when the operation of detection of the error has yielded a positive result (i.e., the error control code has detected an error in the datum read). In this case, by means of an OR logic operation between the wait signal WAIT_ECC with the clock signal CK, as shown schematically in Figure 8, it is possible to mask the clock signal CK_CPU appropriately. In effect, the high logic level of the clock signal CK_CPU supplied to the central processing unit is kept for a duration equal to one and a half times the period of the clock signal CK.

Thanks to the skipping of one clock cycle, the memory device has all the time needed to carry out location and correction of the erroneous bit within the datum read. Before the next trailing edge of the clock signal CK, the wait signal WAIT_ECC must return to assuming the low logic level so that the microcontroller 2 can resume sampling of the correct datum present on the output of the memory device 1.

Hence, in the event of an erroneous bit, the reading of the datum required is retarded by one clock cycle and not just by the time necessary to accomplish the correction operation.

It is now of fundamental importance to understand when it is advantageous to implement the error correction according to the present invention, i.e., using the wait signal WAIT_ECC, rather than in the classic way, i.e., executing, at each reading, all three operations of decoding, detection and correction. A criterion can once again be indicated by an analysis of the conditions of defectiveness of the technology with which a memory cell is built.

Consider once again the previous worst case example of reading of a 64-bit datum and assume that the time for reading a 64-bit datum is 20 ns, that the error detection time $T_{DET}$ is 2.5 ns, and that the correction time $T_{COR}$ is 1 ns. If, at each reading, all three operations of decoding, detection and correction were required, the time necessary for reading a 64-bit datum would always be 23.5 ns, irrespective of the errors present. Using, instead, the present invention, the time necessary for reading a 64-bit datum would be reduced by 1 ns, even accepting loss of one clock cycle more for correcting the errors when these were present.

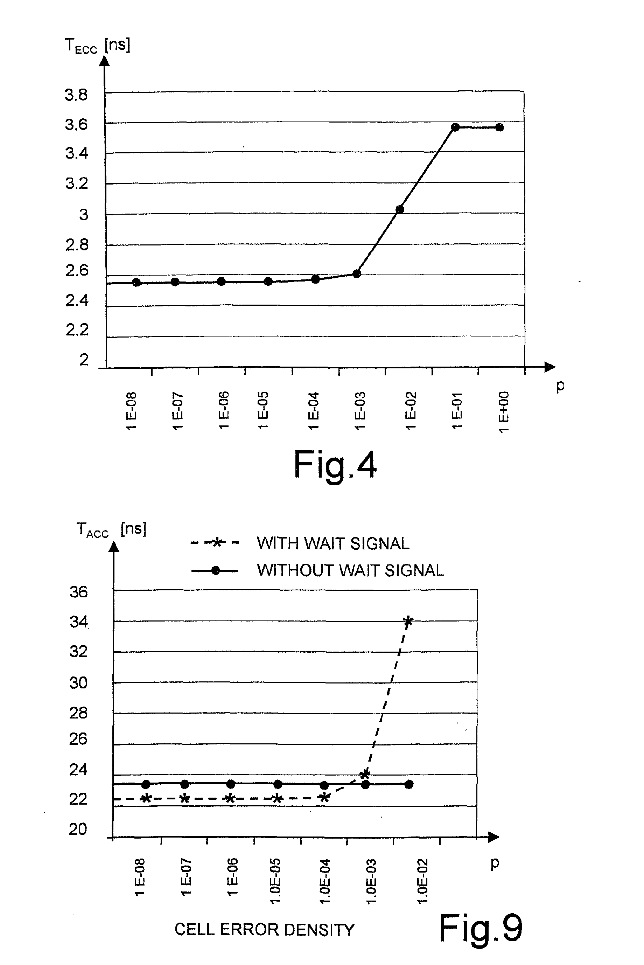

Figure 9 shows the plot of the mean data access time $T_{ACC}$ as a function of the error probability p both for a memory device according to the present invention (solid line), i.e., using the wait signal WAIT_ECC, and for a memory device according to the prior art (dashed line), i.e., not using the wait signal WAIT_ECC.

It may thus be noted that, up to attainment of values of defectiveness for the memory cells of $5 \cdot 10^{-4}$, thanks to the rareness with which the errors occur, the implementation of error correction with the aid of the wait signal WAIT_ECC leads to an effective mean reduction in the data access time by approximately 1 ns. Experimentally, from the data available for the technologies currently in production, it is noted that the defectiveness for the memory cells does not reach values beyond which the use of the wait signal WAIT_ECC proves disadvantageous.

For a better understanding of the effective advantage of error correction according to the present invention, we shall, for example, take into consideration the case of a reading in the memory device of a block of instructions, for example the programs which the microcontroller will read.

During execution of any program, the instructions that make it up are read sequentially in the memory device. In the case where a datum containing an erroneous bit were to be read, the microcontroller should wait a clock cycle more before acquiring the instruction for enabling the error control code to correct the instruction.

As long as the erroneous instructions that make up the program appear in a limited number, the time necessary for execution of the entire program will not lead to appreciable delays due to time lost for correction of the erroneous instructions. In so-called real time systems, however, an indeterminacy of the execution time is represented by the response to interrupts, so that it is deemed that the implementation of an error control code according to the present invention will not have a significant impact on the correct operation of the system as a whole.

Finally, it is clear that modifications and variations can be made to what is described and illustrated herein, without thereby departing from the scope of the present invention, as defined in the annexed claims.

**Claims**

1. An error control method for a memory device (1), comprise the steps of:

   - detecting whether a datum read in the memory device (1) is affected by error;
   - upon detection of the presence of an error in the datum read, subjecting the datum read to an error correction operation;

of:

- upon detection of the absence of errors in the datum read, supplying the datum read directly on the outputs of the memory device (1) without subjecting it to an error correction operation.

2. The method according to Claim 1, **characterized in that** the step of detecting whether the datum read is affected by error comprises the step of decoding the datum read using an error control code (ECC).

3. The method according to Claim 2, **characterized in that** the step of decoding the datum read comprises the step of determining the syndrome of the datum read.

4. The method according to Claim 3, **characterized in that** the absence of errors in the datum read is detected in the case where the syndrome of the datum read is zero.

5. The method according to any one of Claims 2 to 4, **characterized in that** the step of subjecting the datum read to an error control operation comprises the steps of:

- determining the number of errors present in the datum read;
- comparing the number of errors present in the datum read with the correction capacity of the error control code (ECC);
- if the number of errors present in the datum read is equal to or less than the correction capacity of the error control code (ECC), determining the position of the errors in the datum read, correcting said errors, and supplying the correct datum on the outputs of the memory device (1);
- if instead the number of errors present in the datum read is greater than the correction capacity of the error control code (ECC), supplying on the outputs of the memory device (1) an emergency code.

6. The method according to Claim 5, **characterized in that** it further comprises the steps of:

- supplying on the outputs of the memory device (1) an enabling/disabling logic signal (WAIT_ECC) for enabling/disabling reading of the data present on the outputs of the memory device (1) by electronic devices (2) cooperating with the memory device (1);
- upon detection of the absence of errors in the datum read, getting the enabling/disabling signal (WAIT_ECC) to assume a first logic level, enabling the reading of the data; and
- upon detection of the presence of an error in the datum, getting the enabling/disabling signal (WAIT_ECC) to assume a second logic level, disabling the reading of the data.

7. The method according to Claim 6, **characterized in that** it further comprises the step of:

- after supplying either a correct datum or an emergency code on the outputs of the memory device (1), getting the enabling/disabling signal (WAIT_ECC) to assume the first logic level.

8. A memory device (1) comprising error control means (20-120) including:

- detecting means (20) for detecting whether a datum read in the memory device (1) is affected by error; and
- error correcting means (60-120) activated upon detection of the presence of an error in the datum read for subjecting the datum read to an error correction operation;

**characterized in that** said error correcting means (20-120) further comprise:

- data forwarding means (40) activated upon detection of the absence of errors in the datum read for supplying the datum read directly on the outputs of the memory device (1) without subjecting it to an error correction operation.

9. The memory device according to Claim 8, **characterized in that** said detecting means comprise decoding means (20) for decoding the datum read using an error control code (ECC).

10. The memory device according to Claim 9, **characterized in that** said decoding means comprise first processing means (20) for determining the syndrome of the datum read.

11. The memory device according to Claim 10, **characterized in that** said condition of absence of errors in the datum read is detected in the case where the syndrome of the datum is zero.

12. The memory device according to any one of Claims 9 to 11, **characterized in that** said error correcting means (60-120) comprise:

- second processing means (60) for determining the number of errors present in the datum read;
- comparator means (60) for comparing the number of errors present in the datum with the correction capacity of the error control code (ECC);

- locating means (70) activated if the number of errors present in the datum read is equal to or less than the correction capacity of the error control code (ECC) for determining the position of the errors in the datum read;
- third processing means (80) activated if the number of errors present in the datum read is equal to or less than the correction capacity of the error control code (ECC) for correcting the errors in the datum read;
- data forwarding means (90) activated if the number of errors present in the datum read is equal to or less than the correction capacity of the error control code (ECC) for supplying the correct datum on the outputs of the memory device; and
- emergency code generating means (120) activated if the number of errors present in the datum read is greater than the correction capacity of the error control code (ECC) for supplying an emergency code on the outputs of the memory device (1).

13. The memory device according to Claim 12, **characterized in that** it further comprises:

- signal generating means (50, 100) for generating and supplying on the outputs of the memory device (1) an enabling/disabling logic signal (WAIT_ECC) for enabling/disabling reading of the data present on the outputs of the memory device (1) by electronic devices (2) cooperating with the memory device (1);
- first conditioning means (50) activated upon detection of the absence of errors in the datum read for getting the enabling/disabling signal (WAIT_ECC) to assume a first logic level, enabling the reading of the data; and
- second conditioning means (100) activated upon detection of the presence of an error in the datum read for getting the enabling/disabling signal (WAIT_ECC) to assume a second logic level, disabling the reading of the data.

14. The memory device according to Claim 13, **characterized in that** it further comprises:

- third conditioning means (100) for getting the enabling/disabling signal (WAIT_ECC) to assume the first logic level after supplying either a correct datum or an emergency code on the outputs of the memory device (1).

2

FFWAITN

DATA BUS

ADD BUS

μC

MEMORY

1

## Fig.1

3

FFWAITN

$\overline{WAIT\_ECC}$

OTHER ENABLING
SIGNALS FOR FFWAITN

## Fig.3

DATA
READING — 10

COMMONLY FOLLOWED PATH

20

ERROR
DETECTION

30

ERRORS ?  →NO→  OUTPUT
DATA — 40

RARE CASE

YES

WAIT_ECC HIGH — 50

60

HOW MANY ?  →>1→  DATA NOT
CORRECTABLE
BY ECC  →  OUTPUT
EMERGENCY
CODE

70  ↓1

POSITION
COMPUTATION

110      120

WAIT_ECC LOW

CORRECTION

100

80

CORRECT
OUTPUT
DATA — 90

## Fig.2

Fig.5

Fig.6

Fig.7

Fig.8

Fig.4

CELL ERROR DENSITY

Fig.9

EP 1 376 358 A1

## EUROPEAN SEARCH REPORT

**European Patent Office**

**Application Number**

EP 02 42 5409

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "HIGH-PERFORMANCE ERROR CORRECTION CODE IMPLEMENTATION FOR MICROPRO-CESSORS" IBM TECHNICAL DISCLOSURE BULLETIN, IBM CORP. NEW YORK, US, vol. 35, no. 5, 1 October 1992 (1992-10-01), pages 29-30, XP000312872 ISSN: 0018-8689 * the whole document * | 1-14 | G06F11/10 |
| X | EP 0 080 785 A (WESTERN ELECTRIC CO) 8 June 1983 (1983-06-08) * the whole document * | 1-14 | |
| X | US 5 961 655 A (JOHNSON LEITH  ET AL) 5 October 1999 (1999-10-05) * the whole document * | 1-14 | |
| X | F.J. AICHELMANN, JR.:  "ERROR-CORRECTION TIME BYPASSING TECHNIQUE" IBM TECHNICAL DISCLOSURE BULLETIN, IBM CORP. NEW YORK, US, vol. 19, no. 8, January 1977 (1977-01), pages 3075-3076, XP002224678 * the whole document * | 1-14 | **TECHNICAL FIELDS SEARCHED (Int.Cl.7)** G06F |
| A | "IMPROVED BYPASS ECC" IBM TECHNICAL DISCLOSURE BULLETIN, IBM CORP. NEW YORK, US, vol. 33, no. 10B, 1 March 1991 (1991-03-01), pages 110-111, XP000110152 ISSN: 0018-8689 * the whole document * | 3,4 | |
| A | EP 0 386 462 A (IBM) 12 September 1990 (1990-09-12) * abstract * | 5 | |

-/--

The present search report has been drawn up for all claims

| Place of search | Date of completion of the search | Examiner |
|---|---|---|
| THE HAGUE | 12 December 2002 | Absalom, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 42 5409

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 953 351 A (TOPPS AVERY COX ET AL) 14 September 1999 (1999-09-14) * abstract * | 5 | |
| A | EP 0 278 415 A (HONEYWELL BULL SPA) 17 August 1988 (1988-08-17) * abstract * | 5 | |

TECHNICAL FIELDS SEARCHED (Int.Cl.7)

The present search report has been drawn up for all claims

| Place of search | Date of completion of the search | Examiner |
|---|---|---|
| THE HAGUE | 12 December 2002 | Absalom, R |

EPO FORM 1503 03 82 (P04C01)

**ANNEX TO THE EUROPEAN SEARCH REPORT
ON EUROPEAN PATENT APPLICATION NO.**

EP 02 42 5409

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2002

| Patent document cited in search report | | | Publication date | Patent family member(s) | | Publication date |
|---|---|---|---|---|---|---|
| EP 0080785 | A | | 08-06-1983 | US 4456996 A | | 26-06-1984 |
| | | | | EP 0080785 A2 | | 08-06-1983 |
| | | | | GB 2112975 A | | 27-07-1983 |
| | | | | JP 58107964 A | | 27-06-1983 |
| US 5961655 | A | | 05-10-1999 | NONE | | |
| EP 0386462 | A | | 12-09-1990 | US 5058115 A | | 15-10-1991 |
| | | | | AU 623490 B2 | | 14-05-1992 |
| | | | | AU 4939390 A | | 13-09-1990 |
| | | | | BR 9001125 A | | 05-03-1991 |
| | | | | CA 2002362 A1 | | 10-09-1990 |
| | | | | CN 1045472 A ,B | | 19-09-1990 |
| | | | | DE 69026743 D1 | | 05-06-1996 |
| | | | | DE 69026743 T2 | | 07-11-1996 |
| | | | | EP 0386462 A2 | | 12-09-1990 |
| | | | | JP 2010625 C | | 02-02-1996 |
| | | | | JP 2278449 A | | 14-11-1990 |
| | | | | JP 7043678 B | | 15-05-1995 |
| | | | | KR 9205297 B1 | | 29-06-1992 |
| | | | | NZ 232458 A | | 26-03-1992 |
| | | | | SG 44390 A1 | | 19-12-1997 |
| US 5953351 | A | | 14-09-1999 | NONE | | |
| EP 0278415 | A | | 17-08-1988 | IT 1202527 B | | 09-02-1989 |
| | | | | CA 1290459 A1 | | 08-10-1991 |
| | | | | EP 0278415 A2 | | 17-08-1988 |
| | | | | JP 63221445 A | | 14-09-1988 |
| | | | | US 4862462 A | | 29-08-1989 |

EPO FORM P0459

For more details about this annex : see Official Journal of the European Patent Office, No. 12/82